# EUROPÄISCHE PATENTSCHRIFT

(11) **EP 4 208 407 B1**
(45) Veröffentlichungstag und Bekanntmachung des Hinweises auf die Patenterteilung: **28.08.2024**
(21) Anmeldenummer: 21773320.3
(22) Anmeldetag: 02.09.2021
(51) Int. Cl.: B67D 7/04, B67D 7/34, F16K 1/44, F16K 31/52, F16K 31/60, F16K 37/00, B67D 7/36, B60P 3/22, F16L 37/44

(54) **BE- UND ENTLADEKUPPLUNG EINES TANKFAHRZEUGS**
LOADING AND UNLOADING COUPLING OF A TANK VEHICLE
COUPLEUR DE REMPLISSAGE ET VIDANGE D'UN VÉHICULE-CITERNE

(30) Priorität: 02.09.2020 DE 202020105054 U
(43) Veröffentlichungstag der Anmeldung: 12.07.2023
(73) Patentinhaber: Saeta GmbH & Co. KG, 22880 Wedel (DE)
(72) Erfinder: HAAR, Stefan, 25421 Pinneberg (DE); BRODERSEN, Jan, 22880 Wedel (DE)
(74) Vertreter: Hauck Patentanwaltspartnerschaft mbB
(86) Internationale Anmeldenummer: PCT/EP2021/074257
(87) Internationale Veröffentlichungsnummer: WO 2022/049189

(56) Entgegenhaltungen:
- EP-A1- 1 963 183
- WO-A1-02/02976
- DE-A1- 19 708 895
- US-A- 4 040 456
- US-A- 5 127 428
- US-A1- 2012 255 639

## Beschreibung

Die Erfindung betrifft eine Be- und Entladekupplung eines Tankfahrzeugs, mit einem Sitzventil, umfassend einen Ventilteller und einen Ventilsitz, mit dem der Ventilteller in einer Schließstellung des Sitzventils dichtend zusammenwirkt, und von dem der Ventilteller in einer Offenstellung des Sitzventils abgehoben ist, weiter umfassend einen Betätigungsschaft, der im Zuge eines Verstellens des Sitzventils zwischen der Schließstellung und der Offenstellung axial bewegt wird, und umfassend einen Sensor zum Detektieren einer axialen Bewegung des Betätigungsschafts.

Be- und Entladekupplungen dienen zum Be- und Entladen von Tankkammern von Tankfahrzeugen. Um das System zwischen Be- und Entladevorgängen manipulationssicher auszugestalten, sind sogenannte SPD (Sealed Parcel Delivery) Systeme bekannt. Solche Kupplungssysteme werden auch API-Kupplungen genannt, da sie einer Norm des American Petroleum Institute (API) folgen. Gedanke dieser Kupplungssysteme ist es, den Kraftstoff in der jeweiligen Tankkammer einzuschließen, so dass die in der Tankkammer befindliche Kraftstoffmenge als bekannt angenommen werden kann. Ein Messen der abgegebenen Kraftstoffmenge bei einer vollständigen Entleerung der Tankkammer ist dann nicht erforderlich. Vielmehr kann für die Entleerung die beim Beladen der Tankkammer durchgeführte Messung zugrunde gelegt werden.

Ein Problem besteht dabei in einer unbefugten Entnahme von Kraftstoff aus der Tankkammer beispielsweise im Zuge des Transports von einem Be- zu einem Entladeort. Hierzu ist es bereits bekannt, Bodenventile von Tankkammern von Tankfahrzeugen durch entsprechende Sensoren zu überwachen. Diese Überwachung ist allerdings insbesondere bei Nachrüstung der Sensoren nicht immer zuverlässig. Außerdem kann auf diese Weise nicht das erhebliche Kraftstoffvolumen in dem den Bodenventilen stromab nachgeordneten Leitungssystem des Tankfahrzeugs bis zur Be- und Entladekupplung überwacht werden. Das Kraftstoffvolumen im Leitungssystem kann durchaus mehrere 1001 betragen. Hinzu kommt, dass Tankkammern üblicher Tankfahrzeuge häufig nur recht ungenaue Peilsysteme zum Überwachen des Füllstands aufweisen.

Be- und Entladekupplungen der hier in Rede stehenden Art weisen in der Regel ein Sitzventil auf mit einem Ventilteller, der in einer Schließstellung des Sitzventils dichtend mit einem Ventilsitz zusammenwirkt und in einer Offenstellung des Sitzventils von dem Ventilsitz abgehoben ist. Der Ventilteller ist bei bekannten Be- und Entladekupplungen mit einem Betätigungsschaft verbunden, der zum Verstellen des Sitzventils zwischen der Schließstellung und der Offenstellung entlang seiner Längsachse bewegt wird. Zum Beladen wird regelmäßig durch ein stationäres Gegenkupplungsteil der Beladevorrichtung der Ventilteller des Sitzventils eingedrückt, so dass Kraftstoff durch das Sitzventil in die Tankkammer strömen kann. Zum Entladen wird der Ventilteller beispielsweise durch einen mit dem Betätigungsschaft verbundenen Betätigungshebel von dem Ventilsitz abgehoben. Es sind auch Systeme bekannt, bei denen auch zum Entladen der Ventilteller durch ein Gegenkupplungsteil eingedrückt wird.

Da konstruktionsseitig die Möglichkeit zum Eindrücken des Ventiltellers zum Öffnen des Sitzventils vorgesehen ist, kommt es in der Praxis zu einer Manipulation, indem der Ventilteller für eine unbefugte Kraftstoffentnahme manuell eingedrückt wird. Aufgrund der festen Verbindung des Ventiltellers mit dem Betätigungsschaft führt dies zu einer entsprechenden axialen Bewegung des Betätigungsschafts. Um eine solche unzulässige Manipulation zu erkennen, sind Kupplungssysteme im Einsatz, bei denen die axiale Position des Betätigungsschafts mit einem Positionssensor überwacht wird. Auf diese Weise kann ein unbefugtes Eindrücken des Ventiltellers erkannt und ein entsprechendes Warnsignal ausgegeben werden. Problematisch ist hierbei allerdings, dass bereits ein sehr geringes Eindrücken des Ventiltellers zu einem wenn auch langsamen Abfluss von Kraftstoff führt. Aus diesem Grund müssen die Positionssensoren entsprechend empfindlich eingestellt werden, um bereits kleinste Bewegungen des Betätigungsschafts zuverlässig zu detektieren. In der Praxis hat sich herausgestellt, dass derart empfindliche Positionssensoren zu einer erheblichen Zahl von fehlerhaften Warnmeldungen führen. So sind häufig bereits bei einer Fahrt des Tankfahrzeugs über schlecht befestigte Straßen entstehende Erschütterungen für ein Auslösen des Positionssensors ausreichend. Außerdem verändert sich der Arbeitspunkt des Kupplungssystems, da sich der Ventilteller im Zuge der Lebensdauer des Sitzventils weiter eindrückt. Dies erlaubt einen größeren Öffnungsspalt bevor die Sensorik anspricht.

Aus DE 197 08 895 A1 ist ein Ventil für eine Vollschlauchkupplung an Tankwagen bekannt, mit einem Gehäuse, einem Ventilschaft und einem Ventilteller, der von der Innenseite des Gehäuses durch Federkraft an einen Ventilsitz andrückbar ist und mit einer Sperreinrichtung zur Verhinderung einer unzulässigen Öffnung des Ventils gegen die Federkraft. Dabei ist ein bewegbarer Sperrstift vorgesehen, der im geschlossenen Zustand des Ventils in den Verschiebeweg des Ventilschafts eingreift, wobei der Sperrstift durch einen aufschaltbares Steuersignal aus der die Bewegung des Ventilschafts sperrenden Stellung in eine die Bewegung des Ventilschafts freigebende Stellung verschiebbar ist. Dadurch soll sichergestellt werden, dass ohne Vorhandensein eines Steuersignals eine Öffnung des Ventils und eine Produktentnahme nicht möglich ist. Weiterhin soll eine Sicherheit der Erkennung einer Produktentnahme auch in dem Fall gewährleistet werden, dass eine Manipulation des Steuersignals durchgeführt würde, indem die Betätigung des Sperrstifts durch einen Näherungssensor erkannt wird.

Aus WO 02/02976 A1 ist eine weitere Ventilanordnung bekannt, mit einem Sperrkörper, der über eine Schraubverbindung und ein Scharnierstiftgelenk mit einem Griff verbunden ist. Dabei wird das Problem adressiert, dass es bei einem Transfer von beispielsweise Flüssiggas von einem Behälter in einen anderen zu Emissionen in die Atmosphäre kommt.

US 2012/0255639 A1 beschreibt eine weitere Ventilanordnung, umfassend ein Magnetventil. Das Magnetventil umfasst ein Ventilgehäuse, ein erstes Ventilelement, ein zweites Ventilelement sowie erste und zweite Druckelemente, die insbesondere durch Federn gebildet sein können, sowie eine elektromagnetische Antriebsanordnung.

EP 1 963 183 A1 beschreibt ein Kraftstofftankventil, insbesondere ein Entwässerungsventil für einen Flugzeugkraftstofftank. Mit dem beschriebenen Ventil soll eine Entwässerung eines Kraftstofftanks eines Flugzeuges ohne das Risiko eines Vereisens des Ventils möglich sein.

Ausgehend von dem erläuterten Stand der Technik liegt der Erfindung daher die Aufgabe zugrunde, eine Be- und Entladekupplung der eingangs genannten Art bereitzustellen, mit der eine unzulässige Manipulation des Sitzventils zuverlässig erkannt werden kann und Fehlalarme des Überwachungssystems minimiert werden.

Die Erfindung löst die Aufgabe durch den Gegenstand der Ansprüche 1 und 16. Vorteilhafte Ausgestaltungen finden sich in den abhängigen Ansprüchen, der Beschreibung und den Figuren.

Für eine Be- und Entladekupplung der eingangs genannten Art löst die Erfindung die Aufgabe dadurch, dass der Ventilteller beweglich auf dem Betätigungsschaft angeordnet ist, und dass an einer Außenseite des Sitzventils ein fest mit dem Betätigungsschaft verbundener Betätigungsteller vorgesehen ist, wobei der Betätigungsteller in der Schließstellung des Sitzventils von dem Ventilteller beabstandet ist.

Die erfindungsgemäße Be- und Entladekupplung weist ein Sitzventil auf mit einem Ventilteller und einem Ventilsitz, an dem der Ventilteller in der Schließstellung des

Sitzventils dicht anliegt, und von dem der Ventilteller in der Offenstellung des Sitzventils abgehoben ist. Ein Betätigungsschaft wird zum Verstellen des Sitzventils zwischen der Schließstellung und der Offenstellung entlang seiner Axialrichtung bewegt. Ein Sensor ist vorgesehen zum Detektieren einer axialen Bewegung des Betätigungsschafts.

Erfindungsgemäß ist an einer Außenseite des Sitzventils, also an der zur Umgebung der Be- und Entladekupplung gerichteten Seite, wo das Be- bzw. Entladen erfolgt, also eine Gegenkupplung oder dergleichen zum Be- und Entladen von Kraftstoff angekoppelt wird, ein fest mit dem Betätigungsschaft verbundener Betätigungsteller vorgesehen. Der zusätzlich zu dem Ventilteller vorgesehene Betätigungsteller ist in der Schließstellung des Sitzventils von dem Ventilteller axial, also in Axialrichtung des Betätigungsschafts, beabstandet. Der Betätigungsteller kann bei in der Schließstellung befindlichem Sitzventil nach innen eingedrückt werden, insbesondere gegen eine Vorspannung, vorzugsweise eine Federvorspannung. Im Zuge eines solchen Eindrückens wird auch der fest mit dem Betätigungsteller verbundene Betätigungsschaft axial bewegt. Der eigentliche Ventilteller ist bei der erfindungsgemäßen Be- und Entladekupplung dagegen beweglich auf dem Betätigungsschaft angeordnet, so dass dieser bei einem Eindrücken des Betätigungstellers zunächst nicht in Axialrichtung bewegt wird. Das Sitzventil bleibt also zunächst aufgrund des weiterhin an dem Ventilsitz anliegenden Ventiltellers dicht geschlossen. Erst wenn der Betätigungsteller den axialen Abstand zu dem Ventilteller überschritten hat, kommt der Betätigungsteller mit dem Ventilteller in Kontakt und hebt diesen von dem Ventilsitz ab, so dass das Sitzventil geöffnet wird.

Soll für eine unzulässige Manipulation der Ventilteller eingedrückt werden, so dass Kraftstoff aus der Tankkammer abfließen kann, muss zunächst der Betätigungsteller eingedrückt werden, der gemeinsam mit dem Betätigungsschaft relativ zu dem Ventilteller beweglich ist, bis er mit diesem in Kontakt tritt. Zu diesem Zeitpunkt hat sich der Ventilteller noch nicht bewegt. Kraftstoff kann entsprechend noch nicht austreten. Allerdings hat sich der axial gegenüber dem Ventilteller verschiebbare Betätigungsschaft bereits in Axialrichtung bewegt. Erst bei einem weiteren Eindrücken nun auch des Ventiltellers und einer damit verbundenen weiteren Axialbewegung des Betätigungsschafts kann Kraftstoff aus der Tankkammer austreten. Der Betätigungsteller besitzt dabei insbesondere keine Dichtungsfunktion. Er umfasst insbesondere keine Dichtung und wirkt entsprechend nicht dichtend mit einem entsprechenden Ventilsitz zusammen. Erfindungsgemäß wird somit ein sicherer Schaltweg ohne eine zusätzliche und manipulativ entfernbare Dichtung sowie die vollständige Dichtheit des Sitzventils bis zur sicheren Betätigung des Sensors erreicht. Dadurch wiederum ist es möglich, weniger empfindlich eingestellte Sensoren zur Überwachung der axialen Bewegung des Betätigungsschafts zu verwenden, so dass die im Stand der Technik häufig auftretenden Fehlalarme vermieden werden können. Gleichzeitig ist bis zum Abheben des Ventiltellers von dem Ventilsitz jederzeit eine sichere Abdichtung gewährleistet. Die erfindungsgemäße Be- und Entladekupplung ist damit manipulationssicher und trocken und vermeidet Fehlalarme.

Nach einer besonders praxisgemäßen Ausgestaltung kann der Ventilteller gleitend auf dem Betätigungsschaft gelagert sein. Hierzu kann ein entsprechendes Gleitlager vorgesehen sein.

Gemäß einer weiteren Ausgestaltung kann der Ventilteller gegen den Ventilsitz vorgespannt sein, vorzugsweise federvorgespannt sein. Die Federvorspannung kann zum Beispiel durch eine um den Betätigungsschaft angeordnete Helixfeder oder dergleichen gewährleistet sein.

Auch der Betätigungsteller kann in seine von dem Ventilteller beabstandete Position vorgespannt sein, vorzugsweise federvorgespannt sein. Zum Einsatz kommen kann beispielsweise wiederum eine um den Betätigungsschaft angeordnete Helixfeder.

Der Betätigungsteller kann den Ventilteller bei einer Bewegung des Betätigungsschafts von der Schließstellung in die Offenstellung von seinem Ventilsitz abheben. Wie bereits erläutert, kommt der Betätigungsteller nach Überwinden des Abstands in Kontakt mit dem Ventilteller und drückt diesen von seinem Ventilsitz weg in eine geöffnete Stellung.

Nach einer weiteren Ausgestaltung kann eine Betätigungseinrichtung vorgesehen sein, mit der der Betätigungsschaft zum Verstellen des Sitzventils zwischen der Schließstellung und der Offenstellung axial bewegt werden kann. Die Betätigungseinrichtung kann zum Beispiel eine manuelle Betätigungseinrichtung sein. Zum Beispiel kann sie einen manuell zu betätigenden Betätigungshebel umfassen, der mit dem Betätigungsschaft zum axialen Bewegen des Betätigungsschafts und damit des Ventiltellers zusammenwirkt.

Der Sensor kann ein die axiale Bewegung des Betätigungsschafts bzw. die axiale Position des Betätigungsschafts berührungslos erfassender Positionssensor sein. Dazu kann an dem Betätigungsschaft mindestens ein Magnet angeordnet sein, beispielsweise können an dem Betätigungsschaft mehrere in Axialrichtung beabstandete Magneten angeordnet sein, und der Positionssensor kann ein Magnetsensor sein. Solche Magnetsensoren sind an sich bekannt und erlauben eine zuverlässige Positionserkennung. Dabei benötigen sie wenig Bauraum und unterliegen praktisch keinem Verschleiß.

Es kann weiter vorgesehen sein, dass der Betätigungsteller einen in Richtung des Ventiltellers vorstehenden ringförmigen bzw. zylindermantelförmigen Vorsprung aufweist, der in der Schließstellung des Sitzventils teilweise in einer ringförmigen bzw. zylindermantelförmigen Aufnahme des Ventiltellers aufgenommen ist und im Zuge der axialen Bewegung des Betätigungsschafts in der ringförmigen Aufnahme des Ventiltellers geführt ist. Der ringförmige Vorsprung bzw. der ringförmige Fortsatz kann insbesondere an einem radial äußeren Rand des Betätigungstellers ausgebildet sein. Der ringförmige Vorsprung steht in Richtung des Ventiltellers von dem Betätigungsteller vor, insbesondere in Axialrichtung, die gleichzeitig die Bewegungsrichtung bzw. die Axialrichtung des Betätigungsschafts ist. Der Ventilteller weist bei dieser Ausgestaltung eine ringförmige Aufnahme auf, in der der ringförmige Vorsprung des Betätigungstellers während der Bewegung des Betätigungsschafts zwischen der Schließstellung und der Offenstellung des Sitzventils geführt bewegt wird, insbesondere in axialer Richtung. In der Schließstellung des Sitzventils, wenn also der Betätigungsteller (maximal) von dem Ventilteller beabstandet ist, ist der ringförmige Vorsprung bereits gerade in der ringförmigen Aufnahme aufgenommen. Im Zuge der Bewegung des Betätigungsschafts zum Verstellen des Sitzventils in die Offenstellung wird der ringförmige Vorsprung weiter in die ringförmige Aufnahme eingeschoben. Bei Erreichen des Kontakts zwischen dem Betätigungsteller und dem Ventilteller kann der ringförmige Vorsprung mit seiner ringförmigen Stirnseite zum Beispiel an einer gegenüberliegenden ringförmigen Bodenseite der ringförmigen Aufnahme des Ventiltellers anliegen. Der Kontakt zwischen dem Betätigungsteller und dem Ventilteller kann also auch oder ausschließlich durch den ringförmigen Vorsprung und die ringförmige Aufnahme realisiert sein. Auf diese Weise kann einer Manipulationsart entgegengewirkt werden. So ist als Manipulation simuliert worden, die erfindungsgemäß ermöglichte Relativbewegung zwischen dem Betätigungsteller und dem Ventilteller im Zuge des Öffnens des Sitzventils auszuschalten, indem ein Gegenstand, zum Beispiel ein dünnes Blech, in einen Ringspalt an der Außenseite des Betätigungstellers in Axialrichtung des Betätigungsschafts eingeführt wird, um durch das Blech eine mechanische Verbindung zwischen dem Betätigungsteller und dem dahinterliegenden Ventilteller zu erreichen. Durch diese Manipulationsmaßnahme soll ein Öffnen des Ventiltellers bereits zu Beginn der Bewegung des Betätigungstellers erreicht werden. Gemäß einem noch grundlegenderen Manipulationsversuch wird versucht, durch das Einführen beispielsweise eines dünnen Blechs in den Ringspalt den Ventilteller selbst ohne Bewegung des Betätigungstellers mechanisch aufzudrücken. Diese Art der Manipulation wird durch die vorgenannte Ausgestaltung als eine erste Maßnahme erschwert.

Als weitere Maßnahme, um den vorstehend erläuterten Manipulationsversuch zu unterbinden, kann vorgesehen sein, dass eine radiale Außenfläche des ringförmigen Vorsprungs des Betätigungstellers eine unregelmäßige Form aufweist, vorzugsweise eine Wellen- oder Zick-Zackform, und/oder dass eine der radialen Außenfläche des ringförmigen Vorsprungs des Betätigungstellers gegenüberliegende radiale Innenfläche der ringförmigen Aufnahme des Ventiltellers eine unregelmäßige Form aufweist, vorzugsweise eine Wellen- oder Zick-Zackform.

Voraussetzung für die vorstehend erläuterten Arten der Manipulation ist eine ausreichende Axialsteifigkeit des eingeführten Blechs, um die entsprechenden Kräfte übertragen zu können. Durch die unregelmäßige Form, vorzugsweise die Wellen- oder Zick-Zackform, der radialen Außenfläche des ringförmigen Vorsprungs des Betätigungstellers bzw. der gegenüberliegenden radialen Innenfläche der ringförmigen Aufnahme des Ventiltellers wird das Einführen eines Manipulationsblechs erheblich erschwert, insbesondere auch bei vollständig geöffnetem Sitzventil.

Um das Einführen eines dünnen Gegenstands, wie eines Blechs, in den Ringspalt weiter zu erschweren, können die radiale Außenfläche des ringförmigen Vorsprungs des Betätigungstellers und die gegenüberliegende radiale Innenfläche der ringförmigen Aufnahme des Ventiltellers miteinander während einer Bewegung des Betätigungsschafts in Kontakt stehen. Sofern kein solcher Kontakt besteht, besteht jedenfalls nur ein schmaler ringförmiger Spalt zwischen diesen Flächen von (deutlich) kleiner als 1 mm Breite. Die gewünschte unregelmäßige Form kann beispielsweise durch Rändelung in die entsprechenden Flächen eingebracht werden.

Gemäß einer weiteren Ausgestaltung zum Erschweren vorstehend erläuterter Manipulationsversuche, die mit der vorgenannten Ausgestaltung kombiniert werden kann oder alternativ zu dieser ausgebildet sein kann, kann eine Innenfläche eines Gehäuses der Be- und Entladekupplung vorgesehen sein, die einer Außenfläche des Betätigungstellers gegenüberliegt. Zwischen der Außenfläche und der Innenfläche ist ein schmaler Spalt von vorzugsweise weniger als 1 mm oder ein Flächenkontakt vorgesehen. Das Einführen eines Gegenstands für eine Manipulation wird so weiter erschwert.

Die Außenfläche des Betätigungstellers und die Innenfläche des Gehäuses können in Bezug auf die Axialrichtung des Betätigungsschafts konisch ausgebildet sein. Zwischen der Außenfläche und der Innenfläche ist dann ein konischer Spalt gebildet. Die konische Außenfläche des Betätigungstellers kann im Zuge der Bewegung des Betätigungsschafts auf der konischen Innenfläche des Gehäuses abgleiten.

Die radiale konische Außenfläche des Betätigungstellers kann durch einen an der Außenseite des Betätigungstellers ringförmig umlaufenden Vorsprung oder Überstand gebildet sein. Die einander gegenüberliegenden konischen Flächen können miteinander in Kontakt stehen. Entsprechend können die Flächen im Zuge der Bewegung des Betätigungsschafts zum Verstellen des Sitzventils zwischen der Schließstellung und der Offenstellung aufeinander abgleiten. Sofern kein Kontakt zwischen den Flächen besteht, besteht wiederum ein nur schmaler Spalt zwischen den Flächen von vorzugsweise weniger als 1 mm Breite. Das Vorsehen eines schmalen konischen Spalts oder eines konischen Flächenkontakts zwischen dem Betätigungsteller und einem Gehäuse der Be- und Entladekupplung, gegebenenfalls in Kombination mit dem Ausbilden der konischen Fläche durch einen Vorsprung oder Überstand des Betätigungstellers, kann das Einführen eines flachen Gegenstands, wie eines dünnen Blechs, zur Realisierung der oben erläuterten Manipulationsversuche weiter erschweren bzw. unmöglich machen. Weiterhin kann hierdurch die Axialsteifigkeit des Blechs, jedenfalls soweit verringert werden, dass die erforderlichen Kräfte für das Aufdrücken des Ventiltellers bzw. die mechanische Verbindung zwischen dem Betätigungsteller und dem Ventilteller durch das Blech nicht mehr bereitgestellt werden können.

Nach einer weiteren Ausgestaltung kann die Außenfläche des Betätigungstellers und/oder die Innenfläche des Gehäuses mindestens eine Stufe oder Kante aufweisen. Dies erschwert das Einführen eines Gegenstandes zur Manipulation weiter, insbesondere da das Blech mit der Stufe in Kontakt kommt und unweigerlich den Betätigungsteller bewegt und den Ventilteller nicht erreicht.

Die Erfindung löst die Aufgabe auch durch ein Tankfahrzeug, umfassend mindestens eine Tankkammer für Kraftstoff, wobei die mindestens eine Tankkammer mindestens eine erfindungsgemäße Be- und Entladekupplung umfasst. Das Tankfahrzeug, beispielsweise ein LKW, kann zum Beispiel mehrere Tankkammern für Kraftstoff umfassen, die jeweils ein Bodenventil zum Be- und Entladen der Tankkammer aufweisen. Die Bodenventile können über ein Leitungssystem mit der erfindungsgemäßen Be- und Entladekupplung verbunden sein.

Ein Ausführungsbeispiel der Erfindung wird nachfolgend anhand von Figuren näher erläutert. Es zeigen schematisch:
- Figur 1: eine erfindungsgemäße Be- und Entladekupplung in einer Schnittansicht in einem ersten Betriebszustand,
- Figur 2: die Be- und Entladekupplung aus Figur 1 in einem zweiten Betriebszustand,
- Figur 3: die Be- und Entladekupplung aus Figur 1 in einem dritten Betriebszustand,
- Figur 4: die Be- und Entladekupplung aus Figur 1 in einem vierten Betriebszustand,
- Figur 5: eine ausschnittsweise Schnittdarstellung der erfindungsgemäßen Be- und Entladekupplung nach einem weiteren Ausführungsbeispiel in einem ersten Betriebszustand,
- Figur 6: die Darstellung aus Figur 5 in einem zweiten Betriebszustand,
- Figur 7: den Ventilteller der in den Figuren 5 und 6 gezeigten Be- und Entladekupplung in einer perspektivischen Ansicht,
- Figur 8: den Betätigungsteller der in den Figuren 5 und 6 gezeigten Be- und Entladekupplung in einer perspektivischen Ansicht,
- Figur 9: eine ausschnittsweise Schnittdarstellung der erfindungsgemäßen Be- und Entladekupplung nach einem weiteren Ausführungsbeispiel in einem ersten Betriebszustand, und
- Figur 10: die Darstellung aus Figur 9 in einem zweiten Betriebszustand.

Soweit nichts anderes angegeben ist, bezeichnen in den Figuren gleiche Bezugszeichen gleiche Gegenstände.

Die in den Figuren gezeigte Be- und Entladekupplung 10 wird an einem nicht näher dargestellten Tankfahrzeug mit mindestens einer Tankkammer montiert. Die in den Figuren linke Anschlussseite 12 wird mit einem Leitungssystem des Tankfahrzeugs verbunden, das an seinem anderen Ende mit einem oder mehreren Bodenventilen einer oder mehrerer Tankkammern des Tankfahrzeugs verbunden ist. Die in den Figuren rechte Anschlussseite 14 bildet die Außenseite der Be- und Entladekupplung 10. Mit dieser wird zum Be- und Entladen beispielsweise ein Gegenkupplungsteil einer Be- bzw. Entladevorrichtung verbunden.

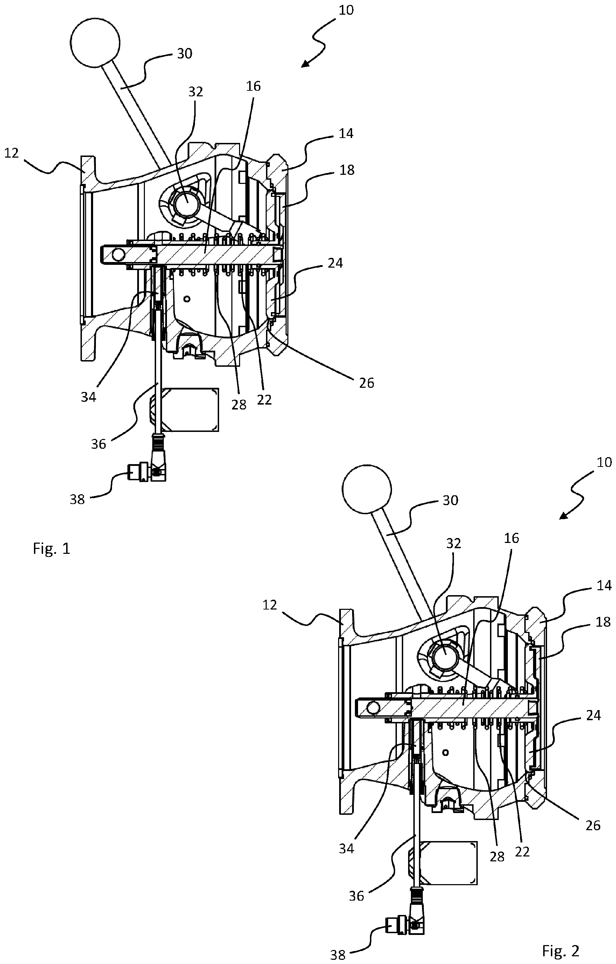

Die Be- und Entladekupplung 10 umfasst ein Sitzventil mit einem axial beweglich gelagerten Betätigungsschaft 16, an dessen der außenseitigen Anschlussseite 14 zugewandtem Ende ein Betätigungsteller 18 befestigt ist. Der Betätigungsschaft 16 ist mit dem Betätigungsteller 18 im dargestellten Beispiel durch eine Helixfeder 22 in die in Figur 1 gezeigte Stellung vorgespannt. Das Sitzventil der Be- und Entladekupplung 10 umfasst darüber hinaus einen im dargestellten Beispiel gleitend auf dem Betätigungsschaft 16 angeordneten Ventilteller 24, der in der in Figur 1 gezeigten Schließstellung dichtend mit einem Ventilsitz 26 zusammenwirkt. Der Ventilteller 24 ist durch eine ebenfalls auf dem Betätigungsschaft 16 angeordnete Helixfeder 28 in die in Figur 1 gezeigte Schließstellung vorgespannt. Weiterhin ist ein manuell zu betätigender Betätigungshebel 30 vorgesehen, der über ein Hebelgelenk 32 mit dem Betätigungsschaft 16 verbunden ist. Der Betätigungshebel 30 und das Hebelgelenk 32 bilden eine Betätigungseinrichtung zum Betätigen des Sitzventils. Mittels des Betätigungshebels 30 kann der Betätigungsschaft 16 zum Verstellen des Sitzventils zwischen der Schließstellung und der Offenstellung in Axialrichtung bewegt werden, in den Figuren also in horizontaler Richtung. An dem Betätigungsschaft 16 sind ein oder mehrere nicht näher dargestellte Magneten angeordnet. Ein berührungslos arbeitender Positionssensor 34, in dem dargestellten Beispiel ein Magnetsensor 34, erkennt den oder die Magneten und überwacht so eine axiale Bewegung des Betätigungsschafts 16. Der Magnetsensor 34 ist über eine Verbindungsleitung 36 und einen Anschluss 38 mit einer nicht näher dargestellten Ausgabeeinrichtung verbunden, die eine durch den Magnetsensor 34 erkannte axiale Bewegung des Betätigungsschafts 16 anzeigen kann. Auf diese Weise kann überprüft werden, ob die Bewegung des Betätigungsschafts 16 ordnungsgemäß oder Teil einer unzulässigen Manipulation ist.

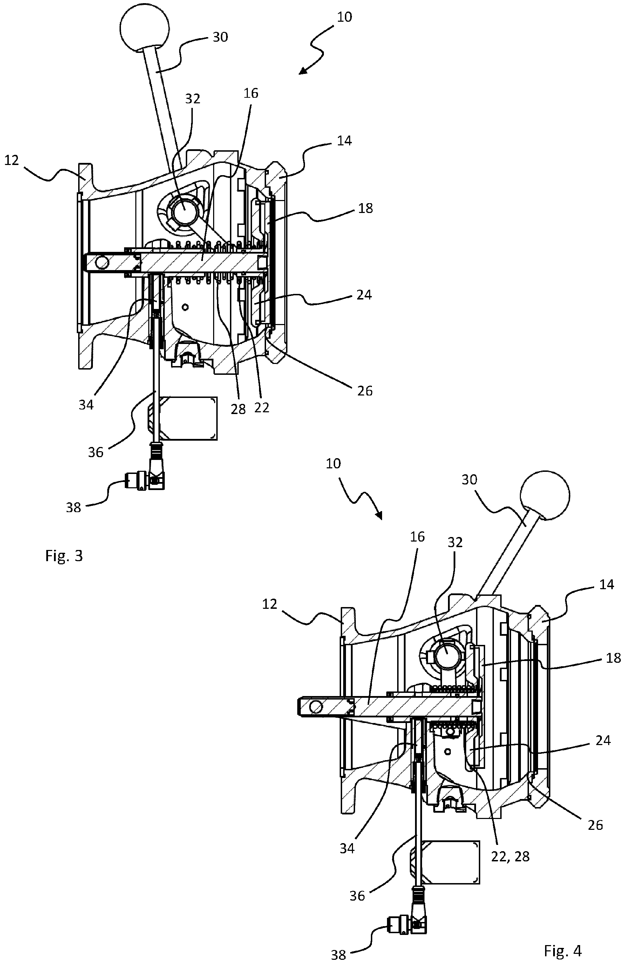

Es ist zum Öffnen des Sitzventils möglich, den Betätigungsteller 18 nach innen einzudrücken. In Figur 2 ist eine teilweise eingedrückte Stellung des Betätigungstellers 18 gezeigt. Aus einem Vergleich der Figuren 1 und 2 ist ersichtlich, dass der Betätigungsteller 18 in der Schließstellung des Sitzventils (Fig. 1) in Axialrichtung beabstandet zu dem Ventilteller 24 angeordnet ist. In Figur 2 ist der Betätigungsteller 18 gerade so weit eingedrückt, dass dieser den zuvor bestehenden Abstand zu dem Ventilteller 24 überwunden hat und mit diesem in Kontakt tritt. Aufgrund der festen Anordnung des Betätigungstellers 18 an dem Betätigungsschaft 16 hat dieser sich zwischen den Figuren 1 und 2 bereits axial bewegt, während der Ventilteller 24 weiterhin dicht an seinem Ventilsitz 26 anliegt, die Be- und Entladekupplung also weiterhin dicht geschlossen ist. Erst bei einem weiteren Eindrücken des Betätigungstellers 18, der bei dieser weiteren Bewegung den Ventilteller 24 mitnimmt und so ebenfalls nach innen eindrückt, kann Kraftstoff an dem Sitzventil vorbei aus der Be- und Entladekupplung austreten. Dieser Zustand ist in Figur 3 gezeigt. Die dabei erfolgte axiale Bewegung des Betätigungsschafts 16 wird durch den Positionssensor 34 detektiert und angezeigt. So kann beispielsweise eine unzulässige Manipulation zur Entnahme von Kraftstoff erkannt werden. Aufgrund der zusätzlichen Anordnung des Betätigungstellers 18 und des Abstands zu dem Ventilteller 24 ist der erforderliche axiale Verfahrweg des Betätigungsschafts 16 zwischen den in den Figuren 1 und 3 gezeigten Zuständen relativ groß. Der Positionssensor 34 muss daher nicht so empfindlich eingestellt werden wie im Stand der Technik verwendete Positionssensoren. Fehlalarme werden entsprechend vermieden.

Zum vollständigen Öffnen der Be- und Entladekupplung kann der Betätigungshebel 30 weiter in die in Figur 4 gezeigte Stellung verstellt werden. Dabei werden der Ventilteller 24 und der Betätigungsteller 18 unter weiterer axialer Bewegung des Betätigungsschafts 16 gegen die Vorspannungen der Helixfedern 22, 28 vollständig in die Offenstellung des Sitzventils verstellt, wie in Figur 4 zu erkennen.

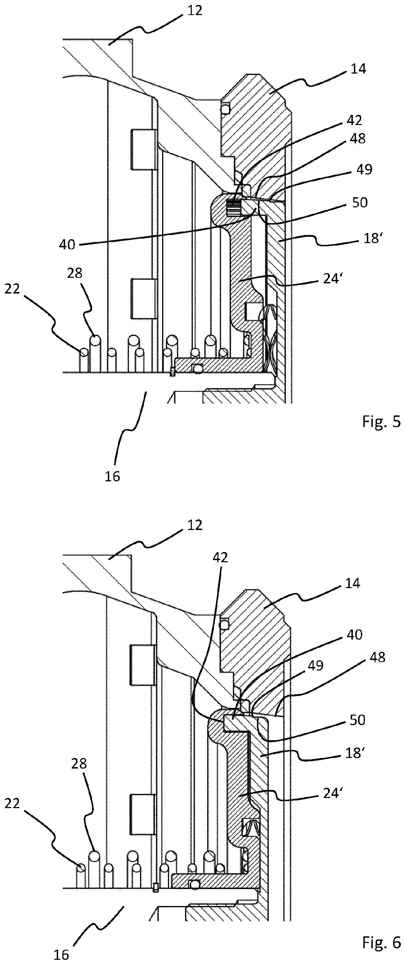

In den Figuren 5 und 6 ist ein weiteres Ausführungsbeispiel einer erfindungsgemäßen Be- und Entladekupplung in einer ausschnittsweisen Schnittdarstellung dargestellt, wobei die Darstellung weitgehend der Darstellung aus den Figuren 1 bis 4 entspricht und gleiche bzw. funktional entsprechende Teile mit denselben Bezugszeichen versehen sind. Die Konstruktion und Funktion des in den Figuren 5 und 6 gezeigten Ausführungsbeispiels entspricht hinsichtlich der nicht dargestellten Komponenten der aus den Figuren 1 bis 4.

Das Ausführungsbeispiel der Figuren 5 und 6 unterscheidet sich von dem Ausführungsbeispiel nach den Figuren 1 bis 4 hinsichtlich der Ausbildung des in Richtung des Ventiltellers 24' vorstehenden ringförmigen Vorsprungs 40 des Betätigungstellers 18' und der den ringförmigen Vorsprung 40 aufnehmenden ringförmigen Aufnahme 42 des Ventiltellers 24'. Wie in den Figuren 5 und 6 zu erkennen, ist der ringförmige Vorsprung 40 des Betätigungstellers 18' in der in Figur 5 gezeigten Schließstellung des Sitzventils teilweise in der ringförmigen Aufnahme 42 aufgenommen. In der in Figur 6 gezeigten teilweise geöffneten Stellung des Sitzventils, in der der Betätigungsteller 18' mit dem Ventilteller 24' in Kontakt steht, ist der ringförmige Vorsprung 40 vollständig in der ringförmigen Aufnahme 42 aufgenommen und liegt mit seiner in Figur 6 linken Stirnseite an einer entsprechenden Bodenseite der ringförmigen Aufnahme 42 an.

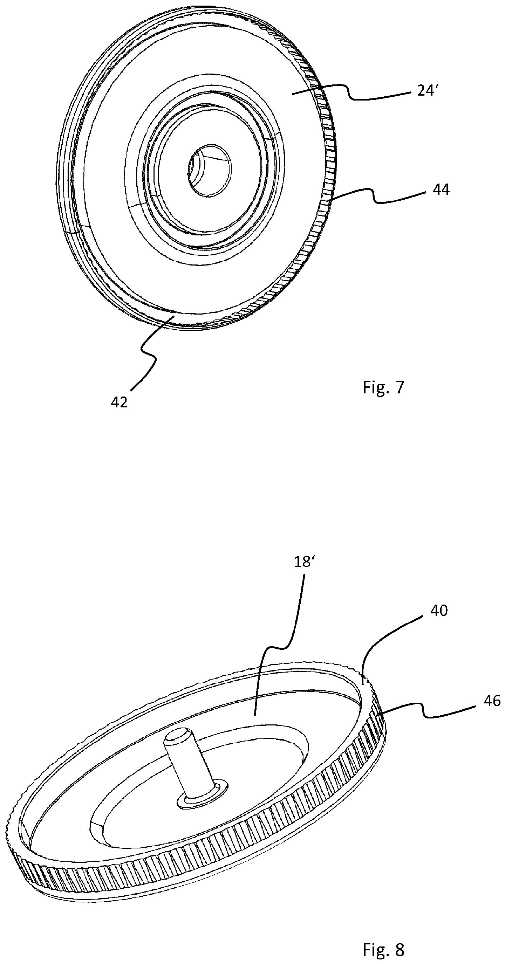

In Figur 7 ist der Betätigungsteller 24' der Be- und Entladekupplung nach dem Ausführungsbeispiel der Figuren 5 und 6 in einer perspektivischen Ansicht gezeigt. Wie zu erkennen, weist die ringförmige Aufnahme 42 an einer der radialen Außenfläche des ringförmigen Vorsprungs 40 des Betätigungstellers 18' gegenüberliegenden radialen Innenfläche eine unregelmäßige Form auf, vorliegend eine Wellen- oder Zick-Zackform 44. In Figur 8 ist der Betätigungsteller 18' der in den Figuren 5 und 6 gezeigten Be- und Entladekupplung in einer perspektivischen Ansicht dargestellt. Dabei ist zu erkennen, dass eine radiale Außenfläche des ringförmigen Vorsprungs 40 des Betätigungstellers 18' ebenfalls eine unregelmäßige Form aufweist, vorliegend ebenfalls eine Wellen- oder Zick-Zackform 46. In der montierten Stellung der Be- und Entladekupplung besteht zwischen den gegenüberliegenden Flächen mit der Wellen- oder Zick-Zackform 44, 46 nur ein schmaler Abstand.

In den Figuren 5 und 6 ist weiter zu erkennen, dass der Betätigungsteller 18' eine Außenfläche 47 aufweist, in der eine Stufe 49 ausgebildet ist. Der Außenfläche 47 gegenüberliegend angeordnet ist eine konische Innenfläche 50 des durch die Anschlussseite 14 gebildeten Gehäuses der Be- und Entladekupplung.

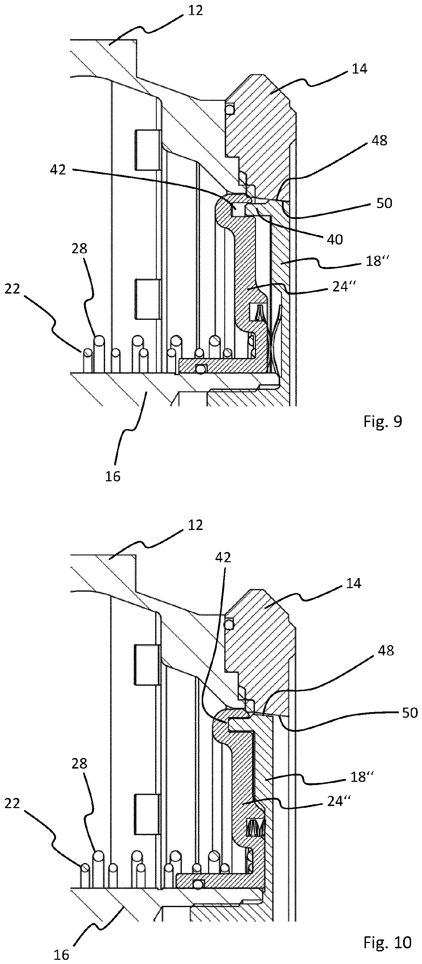

In den Figuren 9 und 10 ist ein weiteres Ausführungsbeispiel einer erfindungsgemäßen Be- und Entladekupplung dargestellt, wobei die Darstellung weitgehend der Darstellung aus den Figuren 5 und 6 entspricht. Wiederum entspricht die Be- und Entladekupplung im Übrigen, insbesondere in Hinblick auf die nicht in der ausschnittsweisen Darstellung gezeigten Komponenten, hinsichtlich Aufbau und Konstruktion der in den Figuren 1 bis 4 gezeigten Be- und Entladekupplung.

Bei dem Ausführungsbeispiel der Figuren 9 und 10 weist der Betätigungsteller 18" eine in Bezug auf die Axialrichtung des Betätigungsschafts 16 konische Außenfläche 48 auf, der die konische Innenfläche 50 des durch die Anschlussseite 14 gebildeten Gehäuses der Be- und Entladekupplung gegenüberliegt. Figur 9 zeigt wiederum die Schließstellung des Sitzventils und Figur 10 zeigt eine teilweise geöffnete Stellung des Sitzventils, in der der Betätigungsteller 18" in Kontakt steht mit dem Ventilteller 24". Aus einem Vergleich der Figuren 9 und 10 ist zu erkennen, dass die komplementär zueinander ausgebildeten konischen Flächen 48 und 50 im Zuge des Verstellens des Sitzventils aufeinander abgleiten. Sie stehen entsprechend miteinander in Kontakt. Es kann aber auch ein schmaler Spalt zwischen den Flächen 48, 50 bestehen. Dies gilt auch für die Flächen 47, 50 in den Figuren 5 und 6.

Durch die Ausführungsbeispiele nach den Figuren 5 bis 10 werden weitere Manipulationsversuche unterbunden, wie oben erläutert.

### Bezugszeichenliste

- 10: Be- und Entladekupplung
- 12: linke Anschlussseite
- 14: rechte Anschlussseite
- 16: Betätigungsschaft
- 18: Betätigungsteller
- 18': Betätigungsteller
- 18": Betätigungsteller
- 22: Helixfeder
- 24: Ventilteller
- 24': Ventilteller
- 24": Ventilteller
- 26: Ventilsitz
- 28: Helixfeder
- 30: Betätigungshebel
- 32: Hebelgelenk
- 34: Magnetsensor
- 36: Verbindungsleitung
- 38: Anschluss
- 40: ringförmiger Vorsprung
- 42: ringförmige Aufnahme
- 44: Wellen- oder Zick-Zackform
- 46: Wellen- oder Zick-Zackform
- 47: Außenfläche
- 48: konische Außenfläche
- 49: Stufe
- 50: konische Innenfläche

## Patentansprüche

1. Be- und Entladekupplung eines Tankfahrzeugs, mit einem Sitzventil, umfassend einen Ventilteller (24, 24', 24") und einen Ventilsitz (26), mit dem der Ventilteller (24, 24', 24") in einer Schließstellung des Sitzventils dichtend zusammenwirkt, und von dem der Ventilteller (24, 24', 24") in einer Offenstellung des Sitzventils abgehoben ist, weiter umfassend einen Betätigungsschaft (16), der im Zuge eines Verstellens des Sitzventils zwischen der Schließstellung und der Offenstellung axial bewegt wird, und umfassend einen Sensor (34) zum Detektieren einer axialen Bewegung des Betätigungsschafts (16), **dadurch gekennzeichnet, dass** der Ventilteller (24, 24', 24") beweglich auf dem Betätigungsschaft (16) angeordnet ist, und dass an einer Außenseite des Sitzventils ein fest mit dem Betätigungsschaft (16) verbundener Betätigungsteller (18, 18', 18") vorgesehen ist, der in der Schließstellung des Sitzventils von dem Ventilteller (24, 24', 24") beabstandet ist.

2. Be- und Entladekupplung nach Anspruch 1, **dadurch gekennzeichnet, dass** der Ventilteller (24, 24', 24") gleitend auf dem Betätigungsschaft (16) gelagert ist.

3. Be- und Entladekupplung nach einem der vorhergehenden Ansprüche, **dadurch gekennzeichnet, dass** der Ventilteller (24, 24', 24") gegen den Ventilsitz (26) vorgespannt ist, vorzugsweise federvorgespannt ist.

4. Be- und Entladekupplung nach einem der vorhergehenden Ansprüche, **dadurch gekennzeichnet, dass** der Betätigungsteller (18, 18', 18") in seine von dem Ventilteller (18, 18', 18") beabstandete Position vorgespannt ist, vorzugsweise federvorgespannt ist.

5. Be- und Entladekupplung nach einem der vorhergehenden Ansprüche, **dadurch gekennzeichnet, dass** der Betätigungsteller (18, 18', 18") den Ventilteller (24, 24', 24") bei einer Bewegung des Betätigungsschafts (16) von der Schließstellung in die Offenstellung von seinem Ventilsitz (26) abhebt.

6. Be- und Entladekupplung nach einem der vorhergehenden Ansprüche, **dadurch gekennzeichnet, dass** eine Betätigungseinrichtung (30, 32) vorgesehen ist, mit der der Betätigungsschaft (16) zum Verstellen des Sitzventils zwischen der Schließstellung und der Offenstellung axial bewegt werden kann.

7. Be- und Entladekupplung nach Anspruch 6, **dadurch gekennzeichnet, dass** die Betätigungseinrichtung (30, 32) eine manuelle Betätigungseinrichtung (30, 32) ist.

8. Be- und Entladekupplung nach einem der vorhergehenden Ansprüche, **dadurch gekennzeichnet, dass** der Sensor (34) ein die axiale Bewegung des Betätigungsschafts (16) berührungslos erfassender Positionssensor (34) ist.

9. Be- und Entladekupplung nach Anspruch 8, **dadurch gekennzeichnet, dass** an dem Betätigungsschaft (16) mindestens ein Magnet angeordnet ist, und dass der Positionssensor (34) ein Magnetsensor (34) ist.

10. Be- und Entladekupplung nach einem der vorhergehenden Ansprüche, **dadurch gekennzeichnet, dass** der Betätigungsteller (18, 18', 18") einen in Richtung des Ventiltellers (24, 24', 24") vorstehenden ringförmigen Vorsprung (40) aufweist, der in der Schließstellung des Sitzventils teilweise in einer ringförmigen Aufnahme (42) des Ventiltellers (24, 24', 24") aufgenommen ist und im Zuge der axialen Bewegung des Betätigungsschafts (16) in der ringförmigen Aufnahme (42) des Ventiltellers (24, 24', 24") geführt ist.

11. Be- und Entladekupplung nach Anspruch 10, **dadurch gekennzeichnet, dass** eine radiale Außenfläche des ringförmigen Vorsprungs (40) des Betätigungstellers (18, 18', 18") eine unregelmäßige Form aufweist, vorzugsweise eine Wellen- oder Zick-Zackform (46), und/oder dass eine der radialen Außenfläche des ringförmigen Vorsprungs (40) des Betätigungstellers (18, 18', 18") gegenüberliegende radiale Innenfläche der ringförmigen Aufnahme (42) des Ventiltellers (24, 24', 24") eine unregelmäßige Form aufweist, vorzugsweise eine Wellen- oder Zick-Zackform (44).

12. Be- und Entladekupplung nach einem der vorhergehenden Ansprüche, **dadurch gekennzeichnet, dass** eine Innenfläche (50) eines Gehäuses der Be- und Entladekupplung vorgesehen ist, die einer Außenfläche (47, 48) des Betätigungstellers (18, 18', 18") gegenüberliegt.

13. Be- und Entladekupplung nach Anspruch 12, **dadurch gekennzeichnet, dass** die Außenfläche (48) des Betätigungstellers (18, 18', 18") und die Innenfläche (50) des Gehäuses in Bezug auf die Axialrichtung des Betätigungsschafts (16) konisch ausgebildet sind.

14. Be- und Entladekupplung nach Anspruch 13, **dadurch gekennzeichnet, dass** die konische Außenfläche (48) des Betätigungstellers (18, 18', 18") im Zuge der Bewegung des Betätigungsschafts (16) auf der konischen Innenfläche (50) des Gehäuses abgleitet.

15. Be- und Entladekupplung nach einem der Ansprüche 12 bis 14, **dadurch gekennzeichnet, dass** die Außenfläche (47) des Betätigungstellers (18, 18', 18") und/oder die Innenfläche (50) des Gehäuses mindestens eine Stufe (49) oder Kante aufweist.

16. Tankfahrzeug, umfassend mindestens eine Tankkammer für Kraftstoff, **dadurch gekennzeichnet, dass** die mindestens eine Tankkammer mindestens eine Be- und Entladekupplung (10) nach einem der vorhergehenden Ansprüche umfasst.

## Claims

1. A loading and unloading coupling of a tank vehicle, with a poppet valve, comprising a valve disk (24, 24', 24") and a valve seat (26), with which the valve disk (24, 24', 24") interacts in a sealing manner in a closed position of the poppet valve, and from which the valve disk (24, 24', 24") is lifted in an open position of the poppet valve, further comprising an actuating shaft (16), which is moved axially during a displacement of the poppet valve between the closed position and the open position, and comprising a sensor (34) for detecting an axial movement of the actuating shaft (16), **characterized in that** the valve disk (24, 24', 24") is arranged movably on the actuating shaft (16), and **in that** an actuating disk (18, 18', 18") connected firmly to the actuating shaft (16) is provided on an outer side of the poppet valve and is spaced apart from the valve disk (24, 24', 24") in the closed position of the poppet valve.

2. The loading and unloading coupling according to claim 1, **characterized in that** the valve disk (24, 24', 24") is mounted in a sliding manner on the actuating shaft (16).

3. The loading and unloading coupling according to one of the preceding claims, **characterized in that** the valve disk (24, 24', 24") is pretensioned, preferably pretensioned with a spring, against the valve seat (26).

4. The loading and unloading coupling according to one of the preceding claims, **characterized in that** the actuating disk (18, 18', 18") is pretensioned, preferably pretensioned with a spring, in its position at a distance from the valve disk (18, 18', 18").

5. The loading and unloading coupling according to one of the preceding claims, **characterized in that** the actuating disk (18, 18', 18") lifts the valve disk (24, 24', 24") from its valve seat (26) when the actuating shaft (16) moves from the closed position into the open position.

6. The loading and unloading coupling according to one of the preceding claims, **characterized in that** an actuating apparatus (30, 32) is provided, with which the actuating shaft (16) can be moved axially to displace the poppet valve between the closed position and the open position.

7. The loading and unloading coupling according to claim 6, **characterized in that** the actuating apparatus (30, 32) is a manual actuating apparatus (30, 32).

8. The loading and unloading coupling according to one of the preceding claims, **characterized in that** the sensor (34) is a position sensor (34) contactlessly detecting the axial movement of the actuating shaft (16).

9. The loading and unloading coupling according to claim 8, **characterized in that** at least one magnet is arranged on the actuating shaft (16), and **in that** the position sensor (34) is a magnetic sensor (34).

10. The loading and unloading coupling according to one of the preceding claims, **characterized in that** the actuating disk (18, 18', 18") has an annular projection (40) that protrudes in the direction of the valve disk (24, 24', 24"), is accommodated partially in an annular socket (42) in the valve disk (24, 24', 24") in the closed position of the poppet valve, and is guided in the annular socket (42) in the valve disk (24, 24', 24") during the axial movement of the actuating shaft (16).

11. The loading and unloading coupling according to claim 10, **characterized in that** a radial outer face of the annular projection (40) of the actuating disk (18, 18', 18") has an irregular shape, preferably a wave or zig-zag shape (46), and/or **in that** a radial inner face of the annular socket (42) in the valve disk (24, 24', 24") lying opposite the radial outer face of the annular projection (40) of the actuating disk (18, 18', 18") has an irregular shape, preferably a wave or zig-zag shape (44).

12. The loading and unloading coupling according to one of the preceding claims, **characterized in that** an inner face (50) of a housing of the loading and unloading coupling is provided, which inner face lies opposite an outer face (47, 48) of the actuating disk (18, 18', 18").

13. The loading and unloading coupling according to claim 12, **characterized in that** the outer face (48) of the actuating disk (18, 18', 18") and the inner face (50) of the housing are conical with reference to the axial direction of the actuating shaft (16).

14. The loading and unloading coupling according to claim 13, **characterized in that** the conical outer face (48) of the actuating disk (18, 18', 18") slides on the conical inner face (50) of the housing during the movement of the actuating shaft (16).

15. The loading and unloading coupling according to one of claims 12 to 14, **characterized in that** the outer face (47) of the actuating disk (18, 18', 18") and/or the inner face (50) of the housing has at least one step (49) or edge.

16. A tank vehicle, comprising at least one tank chamber for fuel, **characterized in that** the at least one tank chamber comprises at least one loading and unloading coupling (10) according to one of the preceding claims.

## Revendications

1. Coupleur de remplissage et de vidange d'un véhicule-citerne, comprenant une soupape à siège, comportant un plateau de soupape (24, 24', 24") et un siège de soupape (26), avec lequel le plateau de soupape (24, 24', 24") coopère de façon étanche dans une position de fermeture de la soupape à siège, et par rapport auquel le plateau de soupape (24, 24', 24") est relevé dans une position d'ouverture de la soupape à siège, comportant en outre un arbre d'actionnement (16), lequel est déplacé axialement pendant un réglage de la soupape à siège entre la position de fermeture et la position d'ouverture, et comportant un capteur (34) pour la détection d'un déplacement axial de l'arbre d'actionnement (16), **caractérisé en ce que** le plateau de soupape (24, 24', 24") est disposée de façon détachable sur l'arbre d'actionnement (16), et **en ce que** sur le côté extérieur de la soupape à siège, il est prévu un plateau d'actionnement (18, 18', 18") relié fixement à l'arbre d'actionnement (16) et espacé du plateau de soupape (24, 24', 24") dans la position de fermeture de la soupape à siège.

2. Coupleur de remplissage et de vidange selon la revendication 1, **caractérisé en ce que** le plateau de soupape (24, 24', 24") est monté de façon coulissante sur l'arbre d'actionnement (16).

3. Coupleur de remplissage et de vidange selon l'une des revendications précédentes, **caractérisé en ce que** le plateau de soupape (24, 24', 24") est précontraint contre le siège de soupape (26), de préférence précontraint par ressort.

4. Coupleur de remplissage et de vidange selon l'une des revendications précédentes, **caractérisé en ce que** le plateau d'actionnement (18, 18', 18") est précontraint dans sa position espacée du plateau de soupape (18, 18', 18"), de préférence précontraint par ressort.

5. Coupleur de remplissage et de vidange selon l'une des revendications précédentes, **caractérisé en ce que** le plateau d'actionnement (18, 18', 18") relève le plateau de soupape (24, 24', 24") de son siège de soupape (26) lors d'un déplacement de l'arbre d'actionnement (16) de la position de fermeture vers la position d'ouverture.

6. Coupleur de remplissage et de vidange selon l'une des revendications précédentes, **caractérisé en ce qu'**il est prévu un dispositif d'actionnement (30, 32), avec lequel l'arbre d'actionnement (16) peut être déplacé axialement entre la position de fermeture et la position d'ouverture pour le réglage de la soupape à siège.

7. Coupleur de remplissage et de vidange selon la revendication 6, **caractérisé en ce que** le dispositif d'actionnement (30, 32) est un dispositif d'actionnement (30, 32) manuel.

8. Coupleur de remplissage et de vidange selon l'une des revendications précédentes, **caractérisé en ce que** le capteur (34) est un capteur de position (34) détectant sans contact un déplacement axial de l'arbre d'actionnement (16).

9. Coupleur de remplissage et de vidange selon la revendication 8, **caractérisé en ce qu'**au moins un aimant est disposé sur l'arbre d'actionnement (16), et **en ce que** le capteur de position (34) est un capteur magnétique (34).

10. Coupleur de remplissage et de vidange selon l'une des revendications précédentes, **caractérisé en ce que** le plateau d'actionnement (18, 18', 18") présente une saillie annulaire (40) faisant saillie en direction du plateau de soupape (24, 24', 24"), laquelle est reçue partiellement dans un logement annulaire (42) du plateau de soupape (24, 24', 24") dans la position de fermeture de la soupape à siège et guidée dans le logement annulaire (42) du plateau de soupape (24, 24', 24") lors du déplacement axial de l'arbre d'actionnement (16).

11. Coupleur de remplissage et de vidange selon la revendication 10, **caractérisé en ce qu'**une surface extérieure radiale de la saillie annulaire (40) du plateau d'actionnement (18, 18', 18") présente une forme irrégulière, de préférence une forme ondulée ou en zig-zag (46), et/ou **en ce qu'**une surface intérieure radiale du logement annulaire (42) du plateau de soupape (24, 24', 24") opposée à la surface extérieure radiale de la saillie annulaire (40) du plateau d'actionnement (18, 18', 18") présente une forme irrégulière, de préférence une forme ondulée ou en zig-zag (44).

12. Coupleur de remplissage et de vidange selon l'une des revendications précédentes, **caractérisé en ce qu'**il est prévu une surface intérieure (50) du boîtier du coupleur de remplissage et de vidange, laquelle est opposée à une surface extérieure (47, 48) du plateau d'actionnement (18, 18', 18").

13. Coupleur de remplissage et de vidange selon la revendication 12, **caractérisé en ce que** la surface extérieure (48) du plateau d'actionnement (18, 18', 18") et la surface intérieure (50) du boîtier sont réalisées de façon conique par rapport à la direction axiale de l'arbre d'actionnement (16).

14. Coupleur de remplissage et de vidange selon la revendication 13, **caractérisé en ce que** la surface extérieure conique (48) du plateau d'actionnement (18, 18', 18") coulisse sur la surface intérieure conique (50) du boîtier lors du déplacement de l'arbre d'actionnement (16).

15. Coupleur de remplissage et de vidange selon l'une des revendications 12 à 14, **caractérisé en ce que** la surface extérieure (47) du plateau d'actionnement (18, 18', 18") et/ou la surface intérieure (50) du boîtier présente au moins un gradin (49) ou une arête.

16. Véhicule-citerne comportant au moins une chambre de citerne pour du carburant, **caractérisé en ce que** l'au moins une chambre de citerne comporte au moins un coupleur de remplissage et de vidange (10) selon l'une des revendications précédentes.
